# EUROPÄISCHE PATENTSCHRIFT

(11) **EP 1 625 312 B1**
(45) Veröffentlichungstag und Bekanntmachung des Hinweises auf die Patenterteilung: **28.03.2007**
(21) Anmeldenummer: 04731353.1
(22) Anmeldetag: 06.05.2004
(51) Int. Cl.: F16D 65/095, F16D 65/54

(54) **BREMSBELAG FÜR SCHEIBENBREMSEN**
LINING FOR DISC BRAKES
GARNITURE POUR DES FREINS A DISQUE

(30) Priorität: 08.05.2003 DE 10320605
(43) Veröffentlichungstag der Anmeldung: 15.02.2006
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2004/004811
(87) Internationale Veröffentlichungsnummer: WO 2004/099642

(56) Entgegenhaltungen:
- EP-A- 1 010 913
- DE-A- 19 623 867
- US-A- 4 940 119

## Beschreibung

Die Erfindung betrifft einen Bremsbelag für Scheibenbremsen nach dem Oberbegriff des Anspruchs 1.

Aus der EP 1 O10 913 A ist ein Bremsbelag der gattungsgemäßen Art bekannt.

Aus der EP 0534 987 B 1 ist ein Belag bekannt geworden, der eine Druckplatte und ein auf die Druckplatte aufgebrachtes Belagmaterial aufweist, wobei an einer der Außenkanten der Druckplatte eine Blattfeder angeordnet ist, die sich sattelseitig an einem lösbaren Niederhalteelement abstützt und im montierten Zustand mittels zweier Haltelaschen an einem selbsttätigen Lösen gehindert wird.

Dieser Belag eignet sich insbesondere zum Einsatz in pneumatisch betätigten Scheibenbremsen, wie sie beispielsweise aus der Produktinformation "Pneumatisch betätigte Scheibenbremse - Die Standardbremse für moderne Nutzfahrzeuge" der Knorr-Bremse Systeme für Nutzfahrzeuge bekannt sind. Eine ähnliche Konstruktion zeigt die jüngere EP 0 703 378 B1.

Bei Scheibenbremsen, wie sie beispielsweise aus der EP 703 378 B1 bekannt sind, bilden der Schiebesattel und der Bremsträger, an welchem der Schiebesattel verschieblich geführt ist, in ihrem Zusammenspiel Belagschächte aus, in welche die Bremsbeläge von oben her eingesetzt werden.

Bei Bremsungen wird zunächst der eine Bremsbelag auf der mit einer Zuspanneinrichtung versehenen Seite des Bremssattels an die Bremsscheibe gedrückt. Durch die nachfolgende Schiebebewegung des Bremssattels wird sodann der auf der gegenüberliegenden Seite der Bremsscheibe angeordnete Bremsbelag ebenfalls an die Bremsscheibe gedrückt. Dabei wird werden die Bremsbeläge in den Belagschächten der Bremsträger in Richtung der Bremsscheibe verschoben.

Nach erfolgter Bremsung müssen somit sowohl die Zuspanneinheit, der Bremssattel als auch die Bremsbeläge zurückgestellt werden. Zum Zurückstellen der Zuspanneinheit dient dabei eine Rückstellfeder der Zuspanneinrichtung, welche eine Federkraft zwischen dem Bremssattel und der Traverse der Zuspanneinrichtung und damit eine Relativverschiebung dieser beiden Komponenten nach der Bremsung bewirkt.

Die Bremsbeläge werden dagegen - anders als z.B. Bremsbeläge für Trommelbremsen von der Bremstrommel - i.allg. nicht aktiv von der Bremsscheibe zurückgezogen, da man davon ausgeht, dass sich die Bremsbeläge durch Rüttelbewegungen und dergleichen selbsttätig wieder von der Bremsscheibe lösen.

Dabei ergibt sich jedoch das Problem, dass u.U. auch der Bremssattel durch die als Niederhalteelemente agierenden Blattfedern etwas vorgespannt wird, was sich direkt auf das Rückstellverhalten des Bremssattels auswirkt.

Eine hohe Niederhaltekraft bewirkt eine entsprechend hohe Vorspannung des Bremssattels und führt damit u.U. zu einer Beeinträchtigung des Rückstellvorganges. Ein analoger Effekt kann an den Bremsbelägen auftreten. Ein nicht vollständiges Zurückziehen kann zu einem Schleifen der Bremsbeläge führen. Damit wird zwar die Sicherheit nicht beeinträchtigt. Das Schleifen führt aber zu einem schnelleren Verschleiß der Bremsbeläge und erhöht damit die Betriebskosten.

Aus der DE 196 23 867 C2 ist es bekannt, zur Geräuschdämpfung Gummilelemente zwischen einem Abstützelement und der Druckplatte an den tangentialen Abstützflächen der Druckplatte zur Abstützung im Belagschacht des Bremsträgers anzuordnen.

Aus der DE 196 23 867 C2 ist ferner ein mittels einer Feder vorgespanntes Abstützelement für Bremsbeläge von Scheibenbremsen bekannt (siehe Sp. 4, Zeile 30 ff dieser Schrift), wobei das Abstützelement auch die Wirkung eines Rückstellelementes hat. Zunächst führt es bei Bremsungen am Belagträgerschacht eine Kippbewegung auszuführen. Die Feder wirkt dabei nach beendeter Bremsung in axialer Richtung rückstellend. Die Rückstellbewegung ist allerdings - nach der Erkenntnis der vorliegenden Erfindung - aufgrund der relativ undefinierten Kraft, mit welcher die Abstützung in tangentialer Richtung erfolgt, relativ undefiniert.

Die Erfindung hat daher ausgehend vom gattungsgemäßen Stand der Technik die Aufgabe, das Rückstellen der Bremsbeläge mit einfachen konstruktiven Mitteln zu verbessern. Ist der Bremssattel als beweglicher Sattel, d.h. als Schiebe-, Schwimm- oder Schwenksattel ausgebildet, soll vorzugsweise auch die Rückstellbewegung des Bremssattels unterstützt werden. Die Erfindung soll aber prinzipiell auch für Scheibenbremsen mit Festsattel geeignet sein.

Die Erfindung löst diese Aufgabe durch den Gegenstand des Anspruchs 1.

Durch die zweckmäßige Abstützung der Spannfeder zwischen dem Rückstellelement einerseits und der Druckplatte andererseits wird eine besonders einfache und zuverlässige Konstruktion verwirklicht.

Nach einer bevorzugten Weiterbildung der Erfindung ist vorgesehen, dass die Spannfeder als gebogene Blatt- oder Drahtfeder ausgebildet ist, welche mit ihren Enden in seitliche Ansätze beidseits der Ausnehmung für das Rückstellelement eingreift, sich dort abstützt und mit einem mittleren bauchigen Bereich auf das Rückstellelement einwirkt.

Hiermit wird eine besonders zuverlässige und dennoch preisgünstige Konstruktion erreicht.

Die Erfindung eignet sich insbesondere für bewegliche Bremssättel wie Schiebe- oder Schwimmsättel. Sie ist aber prinzipiell auch für Festsättel eignet, wo sie dann jedoch allein die Rückstellung der Bremsbeläge verbessert.

Es ist möglich, je nach Auslegung und Bremsentyp, die Rückstelleinrichtungnur auf einer oder aber auf beiden Seiten der Bremsscheibe an den Bremsbelägen vorzusehen.

Vorteilhafte Ausgestaltungen sind den Unteransprüchen zu entnehmen.

Nachfolgend wird die Erfindung anhand von Ausführungsbeispielen unter Bezug auf die Zeichnung näher beschrieben. Es zeigt:
- Fig.1: eine Seitenansicht eines Belagschachtes an einem Bremsträger und einen darin eingesetzten erfindungsgemäßen Bremsbelag;
- Fig. 2 und 3: zwei um 90° verschiedene Schnittansichten von Bereichen des Ausführungsbeispiels aus Fig. 1, wobei Fig. 2 das Rückstellelement in ausgelenkter Position zeigt; und
- Fig.4: eine Seitenansicht eines Belagschachtes an einem Bremsträger und einen weiteren, nicht unter den Schutzumfang der Ansprüche fallenden Bremsbelag.

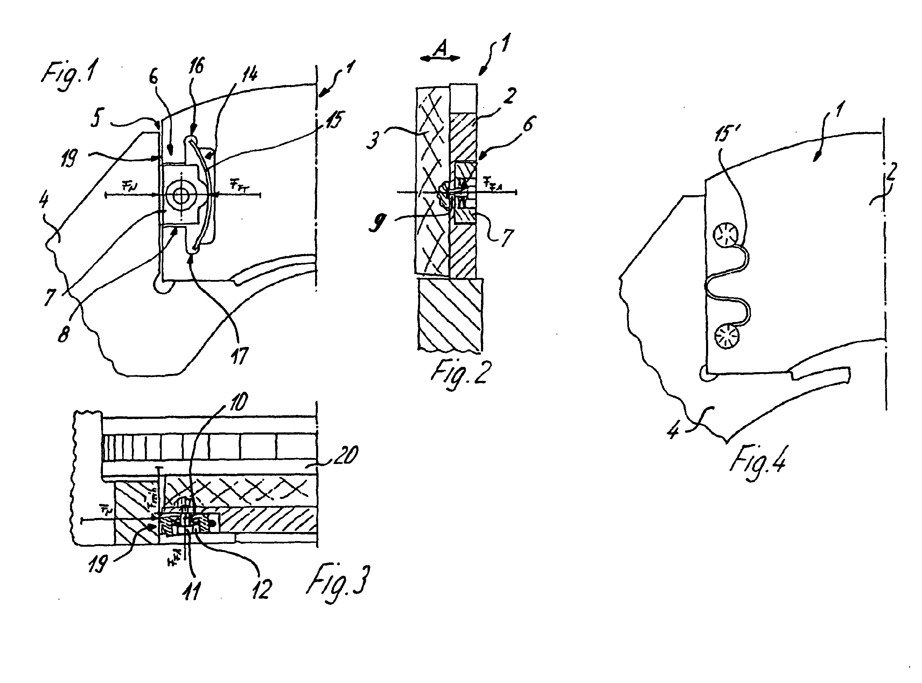

Fig. 1 zeigt einen Bremsbelag 1 bzw. eine Bremsbacke, der aus einer Belagträger- bzw. Druck(verteiler)platte 2 und einem auf die Druckplatte 2 aufgebrachten Belagmaterial 3 besteht.

Der Bremsbelag 1 ist für einen Einsatz in Scheibenbremsen ausgelegt; insbesondere eignet er sich für pneumatisch betätigte Scheibenbremsen mit Schiebe- oder Schwimmsattel (hier nicht dargestellt).

Bei Scheibenbremsen bilden der Bremssattel und/oder - wenn vorhanden - der Bremsträger 4, an welchem ein Schiebesattel verschieblich geführt ist, Belagschächte 5 aus, in welche die Bremsbeläge 1 "von oben" her eingesetzt werden.

Bei Bremsungen wird zunächst der eine Bremsbelag 1 auf der mit einer Zuspanneinrichtung versehenen Seite des Bremssattels an die Bremsscheibe gedrückt. Durch die nachfolgende Schiebebewegung des Bremssattels wird sodann im Falle eines Schiebsattels der auf der gegenüberliegenden Seite der Bremsscheibe angeordnete Bremsbelag ebenfalls an die Bremsscheibe gedrückt (hier nicht dargestellt).

Um die Rückstellung des Bremsbelages und des Bremssattels zu verbessern, ist der Bremsbelag mit wenigstens einer Rückstelleinrichtung 6 versehen. Bevorzugt sind zwei Rückstelleinrichtungen 6 am Bremsbelag an den zu den beiden Seitenwandungen des Belagschachtes (in Umfangsdrehrichtung der Bremsscheibe und gegen dieselbe) gerichteten Seitenwandungen bzw. Abstützflächen 19 der Druckplatte 2 angeordnet.

Die Rückstelleinrichtung 6 nach Fig. 1 bis 3 weist ein Rückstellelement 7 auf, welches in einer Ausnehmung 8 im hinteren Seitenkantenbereich der Druckplatte 2 beweglich geführt ist. Das Rückstellelement 7 weist seinerseits eine Bohrung 9 auf, welche von einem in der Druckplatte 2 verankerten Bolzen 10 durchsetzt ist, auf dem das Rückstellelement 7 in axialer Richtung verschieblich geführt ist. Die Bohrung 9 weist einen größeren Durchmesser als der Bolzen 10 auf, so dass das Rückstellelement 7 auch senkrecht zur axialen Verschieberichtung A des Bremsbelages beweglich bzw. kippbar ist.

Ein Bolzenkopf 11 des Bolzens 10 ist dabei in einer Vertiefung 12 des Rückstellelementes 7 an dessen von der Druckplatte 2 abgewandten Seite angeordnet, so dass die Bautiefe der Belagträger- bzw. Druckplatte 2 in axialer Richtung (bezogen auf eine Bremsscheibe bzw. bezogen auf den Pfeil A in Fig. 2) nicht erhöht wird.

Zwischen dem Bolzenkopf 11 und dem Rückstellelement 7 - z.B. als eine kleine Metallplatte ausgebildet - ist auf dem Bolzen 10 ferner eine axial wirkende Rückstellfeder 13 befestigt, insbesondere eine Schrauben- oder eine Tellerfeder, welche das Rückstellelement 7 in Richtung der Druckplatte 2 vorspannt.

Die Rückstelleinrichtungen 6 umfassen ferner federnd - bezogen auf die Bremsscheibe 20 - in tangentialer Richtung wirkende Spanneinrichtungen 14, welche nach Fig. 1 beispielhaft mittels Spannfedern 15 realisiert werden, welche sich zwischen dem Rückstellelement 7 und der Druckplatte 2 abstützen und das Rückstellelement 7 tangential (relativ zur Bremsscheibe bzw. in Umfangsrichtung der Bremsscheibe) federnd in Richtung der Innenwandung des Belagschachtes 5 am Bremsträger 4 vorspannen.

Nach Fig. 1 wirkt dabei die Spannfeder 15 auf das in der Ausnehmung der Druckplatte 3 in Umfangsrichtung der Bremsscheibe verschieblich geführte Rückstellelement 7 ein. Die Spannfeder 15 ist beispielsweise eine gebogene Blatt- oder Drahtfeder, welche mit ihren Enden in seitliche Ansätze 16, 17 beidseits der Ausnehmung 8 für das Rückstellelement 7 eingreift und mit dem mittleren bauchigen Bereich auf das Rückstellelement 7 einwirkt.

Beim Vorschieben des Bremsbelages 1 während einer Bremsung in Richtung der Bremsscheibe 20 (Fig. 3) weichen die Rückstellelemente 7, welche mittels der Spannfeder 15 an der korrespondierenden Belagschachtwandung des Bremsträgers 4 abgestützt sind mittels einer Kippbewegung gegen die axial wirkende Federkraft der Rückstellfeder 13 aus, d.h. die vorgespannten Rückstellelemente 7 werden am Bremsträger gekippt. Nach dem Ende einer Bremsung sorgt die axial wirkende Rückstellfeder 13 daher durch die entgegengesetzte Kippbewegung des Rückstellelementes 7 für ein Rückziehen des Bremsbelages 1, was sowohl das Rückstellen des Bremsbelages 1 als auch - im Falle von Schiebe- oder Schwimm- oder Schwenksätteln - das Rückstellen des an der Druckplatte 2 reaktionsseitig anliegenden Bremssattels unterstützt.

Falls am Bremsbelag 1 Verschleiß auftritt, werden der Bremsbelag 1 und das Spannelement 7 um das Verschleißmaß in Zuspannrichtung verschoben. Um diesen Funktionsablauf zu gewährleisten ist es von daher erforderlich, dass die Federkraft der Spannfeder 15 geringer ist als die Haftreibekraft zwischen den Belagführungs- bzw. Abstützflächen 19 und den Rückstell- und Spannelementen 7.

Nach Fig. 4 ist dagegen kein Rückstellelement 7 vorgesehen sondern die Spannfeder 15' wirkt als mehrfach in sich gebogene Draht- oder Blattfeder direkt zwischen der Druckplatte 2 und dem Belagschacht 5, so dass eine tangentiale Spannwirkung gegeben ist. Bei einer Bremsung stützt sich die Auswölbung bzw. Biegung 18 an der Innenwandung des Bremsträgers 4 ab, so das die mit ihren freien Enden an der Druckplatte 2 drehfest verankerte Spannfeder 15' zusätzlich in sich gebogen bzw. in sich verdreht wird, was eine zusätzliche axiale Rückstellkraft bewirkt. Die Funktion entspricht damit prinzipiell der Funktion der Fig. 1, nur das hier die Spannfeder 15' auch die Funktionen der axialen Rückstellfeder 13 und des Rückstell- und Spannelementes 7 in sich vereint.

### Bezugszeichen

- Bremsbelag: 1
- Druckplatte: 2
- Belagmaterial: 3
- Bremsträger: 4
- Belagschächte: 5
- Rückstelleinrichtungen: 6
- Rückstellelement: 7
- Ausnehmung: 8
- Bohrung: 9
- Bolzen: 10
- Bolzenkopf: 11
- Vertiefung: 12
- Rückstellfeder: 13
- Spanneinrichtungen: 14
- Spannfeder: 15, 15'
- Ansätze: 16, 17
- Auswölbung: 18
- Abstützflächen: 19
- Bremsscheibe: 20

## Patentansprüche

1. Bremsbelag für eine Scheibenbremse, insbesondere für eine pneumatisch betätigbare Bremsscheibe für Nutzfahrzeuge, mit
a) einer Druckplatte (2) und einem auf der Druckplatte (2) aufgebrachten Belagmaterial (3),
b) wobei an der Druckplatte (2) wenigstens eine den Bremsbelag (1) nach Bremsungen axial rückstellende Rückstelleinrichtung (6) vorgesehen ist, welche sich am Belagschacht (4) einer Scheibenbremse abstützt und bei einer Bremsung im Belagschacht (4) eine Kippbewegung ausführt, und
c) die Rückstelleinrichtung (6) ferner eine in tangentialer Richtung wirkende Spanneinrichtung (14) mit einer Spannfeder (15) aufweist, welche die Druckplatte (2) im nicht eingebremsten Zustand federnd in - bezogen auf eine Bremsscheibe der Scheibenbremse - tangentialer Richtung, d.h. in Richtung des Belagschachtes (4) vorspannt, so dass sich die Rückstelleinrichtung tangential im Belagschacht (4) vorgespannt abstützt,
**dadurch gekennzeichnet, dass**
die Rückstelleinrichtung (6) ein Rückstellelement (7) aufweist, welches in einer Ausnehmung (8) der Druckplatte (2) beweglich geführt ist und sich am Belagschacht (4) abstützt, wobei
sich die Spannfeder (15) zwischen dem Rückstellelement (7) und der Druckplatte (2) abstützt und das Rückstellelement (7) in Richtung des Belagschachts (4) tangential vorspannt.

2. Bremsbelag nach Anspruch 1, **dadurch gekennzeichnet, dass** die Spannfeder (15) als gebogene Blatt- oder Drahtfeder ausgebildet ist, welche mit ihren Enden in seitliche Ansätze (16, 17) beidseits der Ausnehmung (8) für das Rückstellelement (7) eingreift und mit dem mittleren bauchigen Bereich auf das Rückstellelement (7) einwirkt.

## Claims

1. A brake lining for a disc brake, in particular for a pneumatically actuated disc brake for utility vehicles, having
a) a pressure plate (2) and a lining material (3) applied to the pressure plate (2),
b) there being provided on the pressure plate (2) at least one return device (6) which returns the brake lining (1) axially after braking, which rests on the lining shaft (4) of a disc brake and which performs a tilting movement in the lining shaft (4) during braking, and
c) the return device (6) also having a tensioning device (14) which acts tangentially with a tensioning spring (15) and which, when braking is not taking place, pre-tensions the pressure plate (2) by means of a spring tangentially - in relation to a brake disc of the disc brake -, i.e. towards the lining shaft (4), in such a manner that the return device rests tangentially pre-tensioned in the lining shaft (4),
**characterised in that**
the return device (6) has a return element (7) which is mounted in a recess (8) in the pressure plate (2) in such a manner that it is able to move and rests on the lining shaft (4), the tensioning spring (15) being supported between the return element (7) and the pressure plate (2) and the return element (7) being pre-tensioned tangentially in the direction of the lining shaft (4).

2. A brake lining in accordance with claim 1,
**characterised in that**
the tensioning spring (15) is designed as a curved leaf or wire spring, the ends of which engage in lateral projections (16, 17) on either side of the recess (8) for the return element (7) and the central, bellied area of which acts on the return element (7).

## Revendications

1. Garniture de frein pour un frein à disque, en particulier pour un disque de frein à actionnement pneumatique pour des véhicules utilitaires, comprenant
a) un plateau (2) de pression et un matériau (3) de garniture appliqué sur le plateau (2) de pression,
b) sachant qu'au moins un dispositif (6) de rappel, rappelant axialement la garniture (1) de frein à la suite de freinages, est prévu sur le plateau (2) de pression, dispositif qui s'appuie contre le logement (4) de garniture d'un frein à disque et accomplit un mouvement de basculement dans le logement (4) de garniture lors d'un freinage,
c) et que le dispositif (6) de rappel comporte en outre un dispositif (14) de tension pourvu d'un ressort (15) de tension qui, en l'absence de freinage, précontraint élastiquement le plateau (2) de pression en direction tangentielle - par rapport à un disque de frein du frein à disque -, c'est-à-dire en direction du logement (4) de garniture, de sorte que le dispositif de rappel s'appuie tangentiellement de manière précontrainte dans le logement (4) de garniture,
**caractérisée en ce que** le dispositif (6) de rappel comporte un élément (7) de rappel qui est guidé à déplacement dans un évidement (8) du plateau (2) de pression et s'appuie contre le logement (4) de garniture, sachant que le ressort (15) de tension s'appuie entre l'élément (7) de rappel et le plateau (2) de pression et précontraint l'élément (7) de rappel tangentiellement en direction du logement (4) de garniture.

2. Garniture de frein suivant la revendication 1, **caractérisée en ce que** le ressort (15) de tension est réalisé sous forme de ressort cintré à lames ou à boudin, qui s'engage par ses extrémités dans des épaulements (16, 17) latéraux de part et d'autre de l'évidement (8) pour l'élément (7) de rappel et qui agit sur l'élément (7) de rappel par sa région centrale bombée.
